# EUROPEAN PATENT APPLICATION

(11) **EP 0 936 135 A2**
(43) Date of publication of application: **18.08.1999**
(21) Application number: 99102557.8
(22) Date of filing: 11.02.1999
(51) Int. Cl.: B62J 29/00

(54) **Rear view mirror assembly for bicycles**

(30) Priority: 13.02.1998 IT MI980279
(71) Applicant: Dogaiar S.a.s. di Sante Gaiardoni e C., 20146 Milano (IT)
(72) Inventor: Carrieri, Domenico, 20149 Milano (IT)
(74) Representative: Petruzziello, Aldo

(57) **Abstract**

An adjustable rear view mirror assembly for bicycles comprises a reflecting element or mirror (1) mounted on a support (2), in which a cavity (3) is made such as to receive, in a ball-and-socket relationship, a protuberance (8) of a bracket (7; 21; 30) to be connected to a handlebar (11; 21; 100) of a bicycle; said protuberance (8) having a groove (20) able to confer elasticity thereon and thus facilitate insertion thereof in said cavity (3), screw means (5) being provided to lock the support (2) rigidly to the bracket (7; 21; 30).

## Description

The present invention relates to an adjustable rear view mirror assembly for bicycles, particularly suitable to be used on various types of bicycles, such as, for example, bicycles with straight handlebars like mountain bikes and city bikes, bicycles with curved handlebars like racing bikes, and bicycles with R-shaped handlebars like traditional bikes.

Rear view mirrors for bicycles according to the prior art, that is, those fixed on a staff mounted on the handlebar, have many drawbacks. They are very bulky, offer high aerodynamic resistance, are exposed to impact both during travel and in falls, with a consequent possibility of breakage, and they are subject to strong vibrations with a consequent deterioration of visibility.

Racing bikes are not equipped with rear view mirrors, above all because of aerodynamic problems. This results in a serious risk for the cyclist, who cannot see a faster vehicle overtaking from behind.

In bicycles without a mirror the cyclist is obliged to keep turning round, which often causes possible swerving of the bicycle, and furthermore while the cyclist is turned round he/she runs the risk of not seeing any obstacles or deformities in the road surface which may be encountered. In races, moreover, especially during the final sprint, the constant turning round of the cyclists to see who is coming from behind causes a pointless waste of time and slowness to react in giving the final burst.

These problems are solved in part by rear view mirrors mounted on the handlebar extension. These types of mirrors are known to the art, but also have some drawbacks. They consist of a large number of elements to be assembled with a resulting structural complexity and high industrial cost. Furthermore they are fixedly mounted on the handlebar which results in little possibility of adjustment.

Other known mirrors also have the possibility of angular adjustment. However, they are not completely reliable and do not afford secure locking of the mirror in the chosen position.

The objective of the invention is to eliminate these drawbacks, providing a rear view mirror assembly of extremely simple construction, with a practically unlimited range of adjustment in all directions, with secure locking in an adjusted position and which can be fitted on any type of bicycle.

This objective is achieved, in accordance with the invention, with the mirror assembly as said in independent claim 1.

Preferred embodiments of the invention are said in the dependent claims.

An adjustable rear view mirror assembly for bicycles, according to the invention, comprises a support whereon a reflecting element or mirror is mounted, in particular a convex mirror reflecting element. Provided in the support is a substantially spherical cavity to be coupled with a protuberance substantially of the same shape, made in a bracket of the mirror assembly, said bracket being suitable to be connected to the handlebar of the bicycle. Said protuberance has a groove to allow a certain elasticity thereof, and therefore insertion in the corresponding spherical cavity or seat, in which it couples with a slight interference.

Screw means are also provided which by engaging with the spherical protuberance are able to lock the mirror support in a desired position.

In the case of bicycles with straight handlebars, such as mountain bikes and city bikes, the bracket comprises an expansion element made of elastic material, to be inserted in a tubular end of the bicycle handlebar. This expansion element, in particular a cylindrical plug type element, comprises a tubular elastic element mounted on a screw at the end of which is disposed a threaded washer which, on turning the screw, screws thereon, compressing the elastic tubular element which tends to increase in diameter and be blocked inside the handlebar. Connected to the plug element is a rigid supporting part, forming a right angle, at the end of which the spherical protuberance for coupling with the support of the mirror is provided.

In the case of a racing bike with a curved handlebar, the bracket consists of a cylindrical element at one end of which a spherical protuberance for coupling with a cavity made in a support of a mirror is provided.

Around the outer surface of said cylindrical element helical or circular protruding fins are provided. When the bracket is forced inside the tubular end of the handlebar of the racing bike these protruding fins ensure retention and locking thereof.

However, it is also possible to use a plug element for the support of the mirror on racing bikes.

In the case of traditional racing bikes with an R-shaped handlebar, a rigid bracket is provided, at one end of which a spherical protuberance for coupling with the mirror support is provided; at the other end, means for hooking to the handlebar of a traditional bicycle, possibly by hinged means, are provided. In this manner the bracket and the support of the mirror can be moved by means of the hinge means from a working position to a resting position in which they occupy a minimum space.

Further characteristics of the invention will be made clearer by the detailed description that follows, referring to a purely exemplary and therefore non-limiting embodiment thereof illustrated in the appended drawings in which:
Figure 1 is an axonometric, exploded view of an adjustable mirror assembly according to the invention, in a version for mountain bikes or city bikes;
Figure 2 is an overall top plan view of the mirror assembly in Figure 1;
Figure 3 is a view from the left side of Figure 2 of the mirror assembly partially in a midline section;
Figure 4 is an axonometric exploded view of a mirror assembly according to the invention in the version for racing bikes;
Figure 5 is a front view of a mirror bracket for an R-shaped handlebar according to a further embodiment of the invention;
Figure 6 is a view from the right side of Figure 5, rotated of 90° degrees.

A rear view mirror assembly for bicycles according to the invention is described with the aid of the drawings.

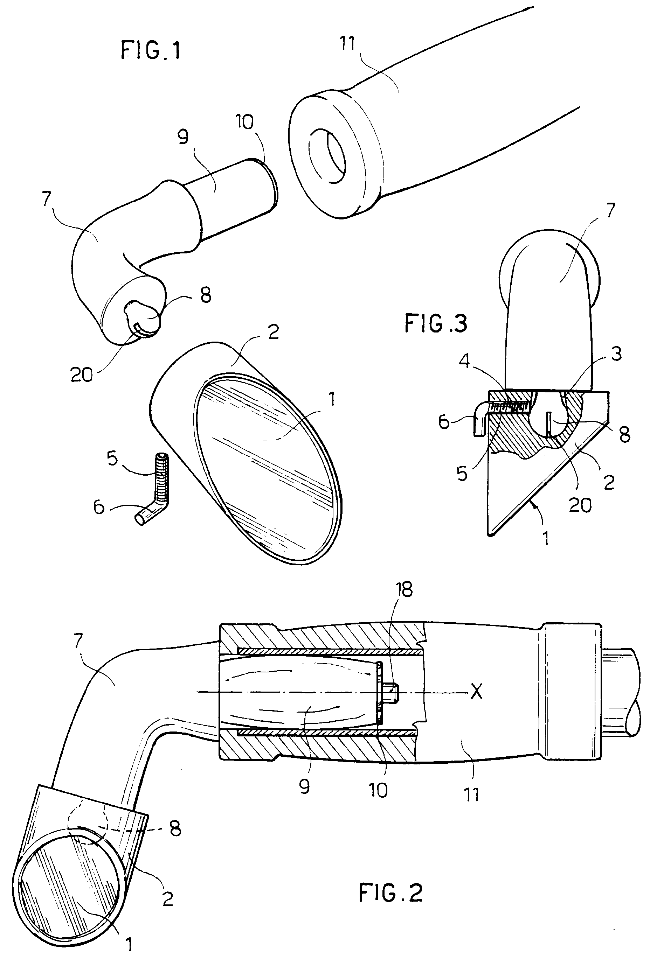

With reference to Figures 1 and 2, a reflecting element or mirror 1 is fixedly mounted on a support 2. The support 2 is cylinder-shaped and cut at one end at a plane having an angle of about 45° with respect to the base of the support 2 and thus forming an elliptical housing on said end inside which said mirror 1, advantageously of a convex type, is positioned. In the other end of the support 2 a substantially spherical-shaped cavity 3 is provided. Communicating with said cavity 3, as can be seen in Figure 3, a threaded hole 4, preferably with a large pitch, able to receive a screw means 5, extends through the support 2. The screw means 5 has a special handle 6, forming for example a right angle with respect to the shaft of the screw, and particularly suitable to be operated manually by a user, such that, for example, rotation through an angle of about 90° in one direction or the other, causes locking and unlocking, respectively, of the mirror support, as will be described better below.

The support 2 of the mirror is supported by means of a bracket 7 consisting of a substantially cylindrical elbow-shaped rigid body. At one end of the rigid body 7 a substantially spherical shaped protuberance 8 is provided. The dimensions of the protuberance 8 are such as to allow it to be forced into the cavity 3 of the support 2 of the mirror, which is made possible by a groove 20, made in the protuberance 8, the groove allowing a certain elasticity thereof and thus assisting insertion into the cavity 3.

Such a coupling allows the mirror to be adjusted to various positions desired.

When the screw means is screwed into the hole 4, it engages with the protuberance 8 thus locking the support 2 of the mirror in a desired position.

The other end of the support 7 is rigidly connected to a screw 18, the axis of which has been indicated by X. The screw 18 is received in an expandable tubular element 9 the length whereof is slightly shorter than that of the screw, in such a way that one end of said tubular element 9 abuts against an end surface of the bracket 7 and the other end of the tubular element abuts against a threaded washer 10 suitable to be screwed onto the screw 18. To make the washer 10 integral with the tubular element 9, sharp teeth (not shown) are provided on the washer that bite into the soft material of the tubular element or plug, in particular rubber. The outer diameter of the tubular element 9 is equal to or smaller than the inner diameter of the end of a handlebar 11 of a bicycle. Once the plug has been inserted inside the handlebar 11, the threaded washer 10 is made to advance by means of a rotation of the screw 18 around its axis X, said washer 10 compressing the tubular element 9 and causing an increase in the diameter thereof and thus an elastically tight coupling with the handlebar 11.

The support of the mirror can be made of various materials, for example plastic, to avoid damage in the event of impact, or aluminium. The mirror can, for example, be made separately of stainless steel or aluminium; a rim of the mirror can be surface treated, for example chrome-plated. Depending upon the material used for the support of the mirror, the mirror can be surface treated directly on the relative support. The mirror bracket 7 can, for example, be made of plastic more rigid than the mirror support. The expandable tubular element can, for example, be made of elastic material like rubber.

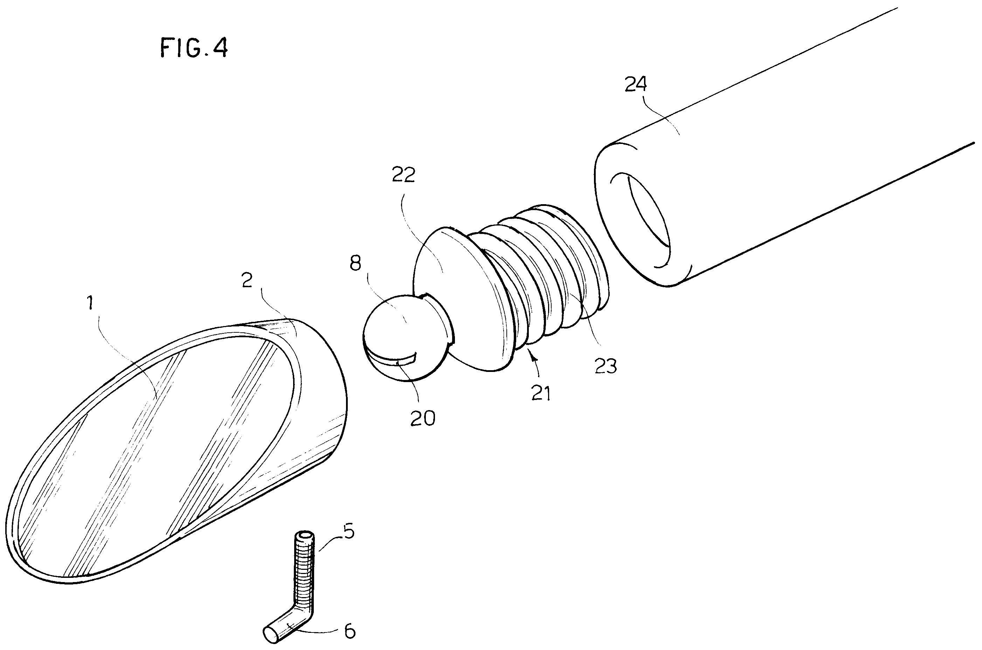

Figure 4 shows a further embodiment of the mirror assembly according to the invention, adaptable to a curved handlebar of a racing bike. The same reference numerals are maintained for the elements substantially the same as in the first embodiment.

In this embodiment a bracket 21 for a support 2 of a mirror 1 is provided. The bracket 21 is substantially cylindrical in shape. One end of said bracket 21 ends in a part-spherical cap 22 on which a protuberance 8 with a groove or notch 20 is provided.

As in the previous embodiment, said protuberance 8 is to be engaged in a ball-and-socket joint in a cavity 3 made in the support 2 of the mirror 1.

Protruding circular fins 23 are provided around the outer peripheral surface of the body 21. Said fins 23 can be disposed on the surface of the bracket 21 helically or according to concentric circumferences on parallel planes. The diameter of said fins must be slightly greater than the diameter of the inner cavity of a tubular handlebar 24 of a racing bike. In this manner by forcing the bracket 21 into the cavity of the handlebar 24 a tight coupling is ensured which allows the bracket 21 to be locked.

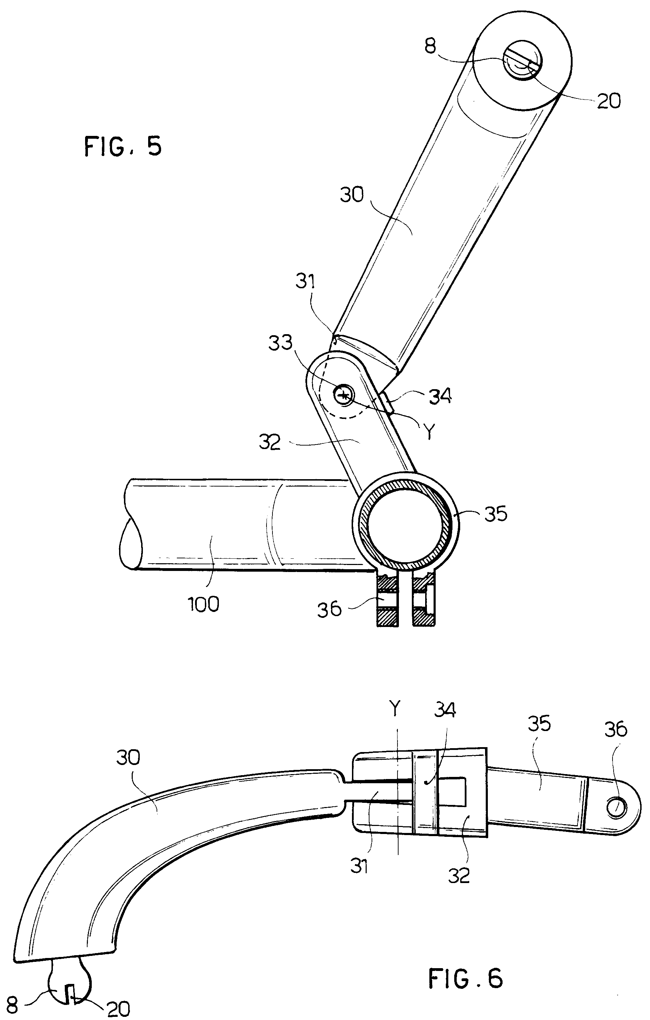

Figures 5 and 6 show a further embodiment of a bracket 30 of a mirror according to the invention, adaptable to an R-shaped handlebar of a traditional bicycle, indicated by reference numeral 100; the same reference numerals have been maintained for the elements substantially the same as in the previous embodiments.

In this embodiment the bracket 30 is a rigid body having an elbow shape at one end of which a spherical protuberance 8 having a notch 20 is provided. Said spherical protuberance 8, as in the previous embodiments, is destined to engage in a cavity 3 made in a mirror support 2.

At the other end the bracket 30 ends with a rod 31 having a flattened shape. The rod 31 is hinged to a fork 32, by means of a pin 33. In this manner the bracket 30 can rotate around an axis Y that corresponds to the axis of the pivot 33.

The fork 32 ends in a snap ring 35 able to hook around any tubular bicycle handlebar. The two ends of the snap ring 35 have two parallel flat surfaces in each of which a hole 36 is made. Fixing of the bracket 30 to the R-shaped handlebar 100 of a traditional bicycle is ensured by means of screw means that engage in two aligned holes 36.

A crosspiece 34, provided in the fork 32, blocks rotation of the bracket 30 in a position of use of the mirror corresponding to the position in which an edge of the rod 31 abuts against the crosspiece 34. When the mirror does not have to be used, it can be placed in the most compact position, corresponding to the position in which the edge of the rod 31 abuts against the edge of the fork 32 opposite the crosspiece 34. In said position the mirror is retracted onto the handlebar of the bicycle and, not protruding outward therefrom, does not occupy additional space.

From the foregoing description it is evident that the rear view mirror assembly according to the invention can be adapted to any type of bicycle handlebar by simply replacing the bracket (7; 21; 30) and succeeds in overcoming the drawbacks of the prior art.

## Claims

1. A rear-view mirror assembly for bicycles comprising a reflecting element (1) on a support (2), engaged on a bracket (7; 21; 30) for connecting to a handlebar (11; 24; 100) of a bicycle, characterized in that said support (2) has a spherical cavity (3) to receive a protuberance (8) of said bracket (7; 21; 30) in a ball-and-socket relationship, said protuberance (8) having at least one notch (20) able to confer a certain elasticity thereto, and assist insertion thereof into said cavity (3), locking means (5) being provided to rigidly lock said support (2) to said bracket (7; 21; 30).

2. A rear-view mirror assembly for bicycles according to claim 1, characterized in that said locking means comprise a screw (5) that engages in a hole (4) made in said support (2) and abuts against said protuberance (8).

3. A rear-view mirror assembly for bicycles according to claim 2, characterized in that said screw (5) has a large pitch and comprises a handle (6) able to allow rapid manual operation thereof.

4. A rear-view mirror assembly for bicycles according to claim 1, characterized in that an expansion element able to be blocked inside a bicycle handlebar (11) is connected to said bracket (7).

5. A rear-view mirror assembly for bicycles according to claim 4, characterized in that said expansion element comprises an elastic tubular element (9), and said expansion element is mounted on a screw (18) integral with said bracket (7), said screw having a threaded washer (10) engaged thereon.

6. A rear-view mirror assembly for bicycles according to claim 5, characterized in that sharp teeth that bite into the soft material of the tubular element (9) are provided on said threaded washer (10) engaged thereon.

7. A rear-view mirror assembly for bicycles according to claim 1, characterized in that protruding fins (23) able to secure retention of said bracket (21) inside a bicycle handlebar (24) are provided on the outer surface of said bracket (21).

8. A rear-view mirror assembly for bicycles according to claim 1, characterized in that said bracket (30) is coupled by means of hinge means to a snap ring (35) able to be fixed to a bicycle handlebar (100).

9. A rear-view mirror assembly for bicycles according to claim 8, characterized in that said hinge means comprise a pin (33) engaging said bracket (30) in a fork (32) thereof integral with said snap ring (35), in such a manner that the bracket (30) can be turned toward an out-of-use position occupying a minimum space, corresponding to the position in which said bracket (30) abuts against said handlebar (100).

10. A rear-view mirror assembly for bicycles according to claim 9, characterized in that a means (34) for blocking rotation of the bracket (30) in a position of use of the mirror is provided in said fork (32).
